# EUROPÄISCHE PATENTSCHRIFT

(11) **EP 2 835 547 B1**
(45) Veröffentlichungstag und Bekanntmachung des Hinweises auf die Patenterteilung: **10.01.2018**
(21) Anmeldenummer: 14175346.7
(22) Anmeldetag: 02.07.2014
(51) Int. Cl.: F16D 13/75

(54) **Nachstelleinrichtung**
Adjusting device
Dispositif de réglage

(30) Priorität: 24.07.2013 DE 102013214445
(43) Veröffentlichungstag der Anmeldung: 11.02.2015
(73) Patentinhaber: Schaeffler Technologies AG & Co. KG, 91074 Herzogenaurach (DE)
(72) Erfinder: Malitourne, Jerome, 67410 Drusenheim (FR); Mán, Lászlo, 77833 Ottersweier-Unzhurst (DE)

(56) Entgegenhaltungen:
- WO-A1-2011/076170
- DE-A1- 10 330 165

## Beschreibung

Die Erfindung betrifft eine Nachstelleinrichtung, mit dessen Hilfe ein verschleißbedingter Fehlabstand einer Anpressplatte zu einer Gegenplatte einer Reibungskupplung nachgestellt werden kann, um einen durch Verschleiß von Reibbelägen der Reibungskupplung erhöhten Hubweg der Anpressplatte zumindest teilweise zu kompensieren.

Aus DE 10 2009 035 225 A1 und WO 2009/056092 A1 sowie WO 2008/058508 A1 ist jeweils eine Reibungskupplung mit einer von einer Hebelfeder relativ zu einer Gegenplatte verlagerbaren Anpressplatte bekannt, um zwischen der Gegenplatte und der Anpressplatte eine Kupplungsscheibe reibschlüssig zu verpressen. In Kraftrichtung zwischen der Hebelfeder und der Anpressplatte ist eine weggesteuerte Nachstelleinrichtung vorgesehen, bei der bei einem hinreichend großen verschleißbedingten Hubweg der Anpressplatte Rampen aufeinander abgleiten können, so dass der Abstand der Hebelfeder zur Anpressplatte nachgestellt und der durch den Verschleiß von Reibbelägen der Kupplungsscheibe erhöhte Hubweg zumindest teilweise kompensiert ist, wodurch im Wesentlichen der ursprüngliche Hubweg im Neuzustand der Reibbeläge wiederhergestellt werden kann. Die Druckschrift WO 2011/076170 A1 offenbart eine Anordnung zur Kupplungsbetätigung, wobei zur Verschleißnachstellung Abstandselemente in die Betätigungsvorrichtung integriert werden.

Die Druckschrift DE 103 30 165 A1 offenbart eine Nachstelleinrichtung gemäß dem Oberbegriff des Patentanspruchs 1.

Es besteht ein ständiges Bedürfnis Reibungskupplungen mit Nachstellfunktion an alternative Bauraumanforderungen anzupassen.

Es ist die Aufgabe der Erfindung Maßnahmen aufzuzeigen, die eine Reibungskupplung mit Nachstellfunktion für eine alternative Bauraumanforderung ermöglicht.

Die Lösung der Aufgabe erfolgt durch eine Nachstelleinrichtung mit den Merkmalen des Anspruchs 1. Bevorzugte Ausgestaltungen der Erfindung sind in den Unteransprüchen angegeben, die jeweils einzeln oder in Kombination einen Aspekt der Erfindung darstellen können.

Eine Nachstelleinrichtung ist zum Nachstellen eines verschleißbedingten Fehlabstands einer Anpressplatte zu einer Gegenplatte einer Reibungskupplung vorgesehen mit einem einen relativ zu einem Betätigungszylinder verlagerbaren Betätigungskolben aufweisenden Betätigungssystem zum Bewegen eines an der Anpressplatte angreifenden Betätigungselement, insbesondere eine als Tellerfeder ausgestaltete Hebelfeder, mit Hilfe des Betätigungskolbens und einem Nachstellanschlag zum Nachstellen einer Relativlage des Betätigungskolbens in dem Betätigungszylinder.

Die Nachstelleinrichtung ist hierbei nicht zwischen dem Betätigungselement und der Anpressplatte vorgesehen, sondern im Bereich des Betätigungssystems. Die Nachstelleinrichtung vergrößert bei einem aufgetretenen Verschleiß von Reibbelägen der Reibungskupplung nicht den Abstand zwischen dem Betätigungselement und der Anpressplatte. Stattdessen wird mit Hilfe des Nachstellanschlags die Position des Betätigungskolbens innerhalb des Betätigungszylinders nachgestellt. Bei einem hinreichend großen verschleißbedingten Hubweg der Anpressplatte und des damit korrespondierenden Ausfahrweg des Betätigungskolbens aus dem Betätigungszylinder kann ein Nachstellereignis der Nachstelleinrichtung dazu führen, dass der Betätigungskolben nicht wieder vollständig in den Betätigungszylinder eingefahren wird, so dass der Betätigungskolben nicht mehr seine maximal eingefahrene Stellung einnehmen kann, die der Betätigungskolben im unverschlissenen Zustand der Reibbeläge der Reibungskupplung zu Beginn des Verschleißbereichs eingenommen hatte. Bei einer nachfolgenden Betätigung der Reibungskupplung mit Hilfe des Betätigungssystems kann sich der Betätigungskolben zu Beginn der Betätigung somit bereits in einer teilweise ausgefahrenen Stellung befinden, so dass zur Durchführung der Betätigung, insbesondere zu einem Schließen der Reibungskupplung, der Betätigungskolben um einen entsprechend geringeren Ausfahrweg ausgefahren werden muss, wobei der nach dem Nachstellereignis erforderliche Ausfahrweg zum Betätigen der Reibungskupplung insbesondere im Wesentlichem dem erforderliche Ausfahrweg zum Betätigen der Reibungskupplung im unverschlissenen Zustand der Reibungskupplung entspricht. Hierzu kann beispielsweise der Nachstellanschlag das Einfahren des Betätigungskolbens in den Betätigungszylinder begrenzen. Der Nachstellanschlag kann beispielsweise ein Ausfahren des Betätigungskolbens aus dem Betätigungszylinder unbegrenzt zulassen aber den Einfahrweg des Betätigungskolbens in den Betätigungszylinder nach einem Betätigen der Reibungskupplung begrenzen. Beispielsweise kann der Nachstellanschlag um einen begrenzten Axialweg bei einem Ausfahren des Betätigungskolbens über eine Rastverbindung mitgenommen werden, wobei ein Rastarm des Nachstellanschlags bei einem hinreichend großen Ausfahrweg des Betätigungskolbens aus dem Betätigungszylinder in einen nachfolgenden Rastzwischenraum des Betätigungskolbens springen kann, so dass der Betätigungskolben um ein dem Rastzwischenraum entsprechendes Inkrement weniger in den Betätigungszylinder wieder eingefahren werden kann. Dadurch, dass die Nachstelleinrichtung nicht in die Reibungskupplung, sondern in das zum Betätigen des Betätigungselements vorgesehene Betätigungssystem integriert ist, kann der axiale Bauraumbedarf der Reibungskupplung auf dem Radiusbereich der Anpressflächen der Anpressplatte und der Gegenplatte verringert werden, so dass eine Reibungskupplung mit Nachstellfunktion für eine alternative Bauraumanforderung, bei der beispielsweise eine geringe axiale Erstreckung im radial äußeren Bereich der Reibungskupplung verlangt wird, ermöglicht ist.

Der Betätigungszylinder des Betätigungssystems ist insbesondere als zylindrischer Ringkanal ausgestaltet, so dass es insbesondere möglich ist für mehr als eine Reibungskupplung zwei oder mehr verschiedene Betätigungszylinder konzentrisch ineinander zu schachteln. Das Betätigungssystem kann insbesondere hydraulisch und/oder pneumatisch betätigt werden. Hierzu kann innerhalb des Betätigungszylinders an der vom Betätigungselement weg weisenden Seite des Betätigungskolbens ein Druck angelegt werden, um bei einer Betätigung der Reibungskupplung den Betätigungskolben aus dem Betätigungszylinder auszufahren. Nach der Betätigung der Reibungskupplung kann der Druck im Betätigungszylinder vorzugsweise auf Umgebungsdruck oder einen Unterdruck reduziert werden, so dass der Betätigungskolben vorzugsweise mit Hilfe der Federkraft einer Rückstellfeder wieder in den Betätigungszylinder eingefahren werden kann. Wenn nach einem Nachstellereignis der Betätigungskolben um eine geringere Wegstrecke in den Betätigungszylinder einfährt, hat dies im Wesentlichen keine Auswirkungen auf das hydraulische und/oder pneumatische System, das den gewünschten Druck im Betätigungszylinder einstellt. Es verbleibt lediglich entsprechend mehr Fluid im Betätigungszylinder, das vom Betätigungskolben beim Einfahren in den Betätigungszylinder nicht mehr verdrängt wird. Die zum Nachstellen erforderlichen Bauteile, insbesondere der Nachstellanschlag, können insbesondere auf einem im Vergleich zum Radiusbereich der Anpressflächen der Anpressplatte und der Gegenplatte geringeren Radius positioniert werden. Dadurch kann das Trägheitsmoment reduziert werden. Zusätzlich ist die Nachstelleinrichtung im Betrieb geringeren Fliehkräften ausgesetzt, so dass Bauteilbelastungen reduziert sind und geringere Festigkeitsanforderungen an die Nachstelleinrichtung gestellt werden können.

Der Nachstellanschlag ist über ein Rampensystem mit dem Betätigungskolben, insbesondere im Wesentlichen spiralförmig, relativ zum Betätigungskolben verdrehbar, wobei der Nachstellanschlag in einer aus dem Betätigungszylinder ausgefahrenen Position des Betätigungskolbens verdrehbar und in einer in dem Betätigungszylinder eingefahrenen Position des Betätigungskolbens gegen ein Verdrehen gesperrt ist. Bei einer für ein Nachstellereignis hinreichend ausgefahrenen Position des Betätigungskolbens aus dem Betätigungszylinder kann eine Relativdrehung des Betätigungskolbens zum Nachstellanschlag erfolgen, so dass durch das Rampensystem eine axiale Relativlage des Betätigungskolbens zum Nachstellanschlag verändert werden kann. Bei einem nachfolgenden Einfahren des Betätigungskolbens in den Betätigungszylinder kann eine vollständige Rückdrehung jedoch gesperrt sein. Hierzu ist beispielsweise zwischen dem Betätigungskolben und dem Nachstellanschlag ein einseitiger Freilauf, beispielsweise ein Ratschenmechanismus vorgesehen. Dadurch kann der Nachstellanschlag bei einem Einfahren des Betätigungskolbens an einem Bauteil anschlagen und ein weiteres Einfahren des Betätigungskolbens in den Betätigungszylinder blockieren, so dass der verschleißbedingte Fehlabstand der Anpressplatte zur Gegenplatte zumindest teilweise kompensiert werden kann.

Insbesondere ist das Rampensystem als ein zwischen dem Betätigungskolben und dem Nachstellanschlag ausgebildetes Gewinde ausgeführt. Die jeweilige Rampe des Rampensystems kann durch den Gewindegang des Innengewindes beziehungsweise des Außengewindes ausgebildet werden. Vorzugsweise ist das Gewinde als Sägegewinde ausgestaltet, so dass bei einem Ausfahren des Betätigungskolbens aus dem Betätigungszylinder das Gewinde leichgängig und bei einem Einfahren des Betätigungskolbens in den Betätigungszylinder das Gewinde selbsthemmend ausgeführt sein kann.

In einer bevorzugten Ausführungsform ist eine Spiralfeder mit einem über den vorgesehenen Federweg der Spiralfeder in axialer Richtung im Wesentlichen unbeweglichen Gewindewicklung vorgesehen, wobei der Nachstellanschlag oder der Betätigungskolben zur Ausführung einer Relativdrehung zwischen dem Nachstellanschlag und dem Betätigungskolben an der Gewindewicklung verdrehbar geführt ist, wobei insbesondere die Spiralfeder zur Aufbringung einer Axialkraft auf ein insbesondere als Schrägkugellager ausgebildetes zwischen dem Betätigungskolben und dem Betätigungselement vorgesehenes Betätigungslager vorgesehen ist. Ein gewindeartiges Rampensystem kann auch die Wicklungen der Spiralfeder ausgebildet werden, wobei hierzu insbesondere eine sowieso vorgesehene Spiralfeder im Bereich des Betätigungssystems verwendet werden kann. So kann beispielsweise zwischen dem normalerweise nicht mitdrehenden Betätigungskolben und dem mitdrehenden Betätigungselement ein vorzugsweise als Schrägkugellager ausgestaltetes Betätigungslager vorgesehen sein. Mit Hilfe der Spiralfeder kann eine axiale Vorlast auf das Betätigungslager ausgeübt werden, so dass ein axiales Auseinaderfallen eines Schrägkugellagers vermieden werden kann. Die Spiralfeder kann sich hierzu beispielsweise an dem Betätigungszylinder oder einem anderen Bauteil axial abstützen und direkt oder indirekt, insbesondere mittelbar über den Betätigungskolben, eine Federkraft auf das Betätigungslager ausüben. Die Spiralfeder kann hierbei in einem Teilbereich Federwicklungen aufweisen, deren Abstand in axialer Richtung sich abhängig vom Federweg durch eine elastische Verformung ändern kann, um dadurch eine entsprechende Federkraft bereit zu stellen. Die Spiralfeder kann in einem anderen Teilbereich die Gewindewicklung aufweisen, deren einzelne Wicklungen im Wesentlichen keine oder nur eine geringförmige Abstandsänderung über den Federweg der Spiralfeder ausüben. In die durch einen Federdraht der Spiralfeder ausgebildete Gewindewicklung kann ein korrespondierendes Innengewinde des Nachstellanschlags oder ein korrespondierendes Außengewinde des Betätigungskolbens relativ verdrehbar eingreifen. Bei einem hinreichend großen Ausfahrweg des Betätigungskolbens kann bei einem Nachstellereignis der Nachstellanschlag oder der Betätigungskolben an der Gewindewicklung der Spiralfeder spiralförmig abgleiten und dadurch die axiale Relativlage des Nachstellanschlags zum Betätigungskolben ändern, um einen verschleißbedingten Fehlabstand nachzustellen.

Besonders bevorzugt sind die Windungen der Gewindewicklung der Spiralfeder in der ausgefahrenen Position des Betätigungskolbens leichgängig und in der eingefahrenen Position des Betätigungskolbens schwergängig. Dadurch kann in der eingefahrenen Position des Betätigungskolbens eine Selbsthemmung erreicht werden, während in der ausgefahrenen Position des Betätigungskolbens eine relative Verdrehbarkeit gewährleistet ist. Hierzu können die Windungen der Gewindewicklung eine geringfügige axiale Abstandsänderung zwischen der eingefahrenen Position des Betätigungskolbens und der ausgefahrenen Position des Betätigungskolbens erfahren, wobei in der eingefahrenen Position des Betätigungskolbens die Windungen der Gewindewicklung mit einer Federkraft in axialer Richtung an einem korrespondierenden Gewinde des Nachstellanschlags oder des Betätigungskolbens anliegen und insbesondere eine selbsthemmende Klemmwirkung erzeugen können. In der ausgefahrenen Position des Betätigungskolbens kann zwischen der Gewindewicklung der Spiralfeder und einem korrespondierenden Gewinde des Nachstellanschlags oder des Betätigungskolbens ein Luftspiel vorliegen, das eine leichgängige Relativdrehung zulässt.

Vorzugsweise schlägt der Nachstellanschlag in der eingefahrenen Position des Betätigungskolbens an dem Betätigungszylinder axial an. Insbesondere erfolgt in der gegebenenfalls zwischenzeitlich nachgestellten eingefahrenen Position des Betätigungskolbens ein direkter Kontakt des Nachstellanschlags an dem Betätigungszylinder. Ein zwischengeschaltetes Bauteil kann dadurch eingespart werden, so dass insbesondere unnötig lange Toleranzketten vermieden werden können. Ferner kann der Nachstellanschlag leicht als mit dem Betätigungssystem vormontierte Baueinheit vorgesehen werden, wodurch die Montage der Reibungskupplung vereinfacht sein kann.

Besonders bevorzugt ist der Nachstellanschlag in der eingefahrenen Position des Betätigungskolbens gegen ein Verdrehen relativ zum Betätigungskolben selbsthemmend mit dem Betätigungskolben gekoppelt, wobei insbesondere in der eingefahrenen Position des Betätigungskolbens an dem Nachstellanschlag eine die Selbsthemmung nicht überwindende, insbesondere von einer Rückstellfeder aufgebrachte, Rückstellkraft angreift. Die insbesondere von der Rückstellfeder aufbringbare Axialkraft kann geringer als eine die Selbsthemmung zwischen dem Betätigungskolben und dem Nachstellanschlag überwindende Mindestaxialkraft sein. Der Nachstellanschlag kann dadurch in der eingefahrenen Position des Betätigungskolbens reibschlüssig, vorzugsweise ausschließlich reibschlüssig, gegen ein Zurückdrehen gesichert sein, ohne dass eine formschlüssige Drehsicherung vorgesehen werden muss. Hierbei kann ausgenutzt werden, dass von dem Betätigungssystem beim Ausfahren des Betätigungskolbens deutlich höhere Axialkräfte auf den Betätigungskolben aufgebracht werden als beim Einfahren des Betätigungskolbens auf den Betätigungskolben einwirken. Dadurch kann eine Reibungskraft zwischen dem Nachstellanschlag und dem Betätigungskolben bei einem Ausfahren des Betätigungskolbens überwunden werden, während dies bei einem Einfahren des Betätigungskolbens nicht der Fall ist.

Insbesondere greift in einer hinreichend ausgefahrenen Position des Betätigungskolbens an dem Nachstellanschlag eine Verdrehkraft zum Verdrehen des Nachstellanschlags relativ zum Betätigungskolben an, wobei die Verdrehkraft durch eine von dem Betätigungssystem aufgebrachte Axialkraft und/oder durch eine im Umfangsrichtung auf den Nachstellanschlag wirkende Federkraft bereitstellbar ist. Bei einem Ausfahren des Betätigungskolbens kann beispielsweise der Nachstellanschlag nach einem hinreichend großen Ausfahrweg des Betätigungskolbens von dem Betätigungskolben soweit axial mitgenommen sein, dass der Nachstellanschlag an einem Hindernis, beispielsweise ein Kupplungsdeckel der Reibungskupplung anschlägt und nicht weiter verlagert werden kann. Wenn die Anpressplatte in dieser Situation noch nicht ihre beabsichtigte Endlage erreicht hat und somit noch ein weiteres Ausfahren des Betätigungskolbens erfolgen muss, führt die von dem Betätigungssystem auf den Betätigungskolben aufgebrachte Axialkraft dazu, dass bei einem weiteren Ausfahren des Betätigungskolbens eine Relativdrehung des Betätigungskolbens zum Nachstellanschlag erfolgt und sich die axiale Relativlage des Betätigungskolbens zum Nachstellanschlag entsprechend des in dieser Situation verschleißbedingt noch zu überwindenden Ausfahrweg verändert, wodurch die Nachstellung bewirkt wird. Es ist aber auch möglich, dass vergleichbar zu einem Kugelschreibermechanismus, durch die Ausfahrbewegung des Betätigungskolbens eine Federkraft in Umfangsrichtung aufgebaut wird, die bei einem hinreicht großen Ausfahrweg des Betätigungskolbens ein Verdrehen des Nachstellanschlags relativ zum Betätigungskolben bewirkt, wodurch die Nachstellung bewirkt wird.

Vorzugsweise ist der Nachstellanschlag entlang eines minimalen Verlagerungswegs des Betätigungskolbens, insbesondere an dem Betätigungszylinder, in axialer Richtung geführt und gegen ein Verdrehen gesichert. Eine Relativdrehung des Nachstellanschlags zum Betätigungskolben kann dadurch nur dann erfolgen, wenn der Nachstellanschlag um eine den Betrag des minimalen Verlagerungswegs übersteigende Wegstrecke axial verlagert wurde und aus der axialen Führung heraus gelangt. Unnötige Nachstellungen können dadurch vermieden werden. Ferner erleichtert die axiale Führung die Ausgestaltung eines Kugelschreibermechanismus.

Die Erfindung betrifft ferner ein Kupplungsaggregat zum Kuppeln einer Antriebswelle eines Kraftfahrzeugs mit mindestens einer Getriebeeingangswelle eines Kraftfahrzeugs, mit einer eine Gegenplatte und eine relativ zur Gegenplatte verlagerbare Anpressplatte aufweisenden Reibungskupplung zum reibschlüssigen Verpressen einer Kupplungsscheibe zwischen der Gegenplatte und der Anpressplatte, einem an der Anpressplatte angreifendes Betätigungselement, insbesondere eine als Tellerfeder ausgestaltete Hebelfeder, und einer Nachstelleinrichtung, die wie vorstehend beschrieben aus- und weitergebildet sein kann, wobei die Reibungskupplung einen die Gegenplatte und/oder die Anpressplatte zumindest teilweise abdeckenden Kupplungsdeckel aufweist und der Nachstellanschlag in einer hinreichend ausgefahrenen Position des Betätigungskolbens an dem Kupplungsdeckel anschlägt. Dadurch, dass die Nachstelleinrichtung nicht in die Reibungskupplung, sondern in das zum Betätigen des Betätigungselements vorgesehene Betätigungssystem integriert ist, kann der axiale Bauraumbedarf der Reibungskupplung auf dem Radiusbereich der Anpressflächen der Anpressplatte und der Gegenplatte verringert werden, so dass eine Reibungskupplung mit Nachstellfunktion für eine alternative Bauraumanforderung, bei der beispielsweise eine geringe axiale Erstreckung im radial äußeren Bereich der Reibungskupplung verlangt wird, ermöglicht ist. Ferner kann beim Ausfahren des Betätigungskolbens der Nachstellanschlag von dem Betätigungskolben mitgenommen werden, bis der Nachstellanschlag von der von dem Betätigungssystem aufgebrachten Kraft an dem sowieso vorgesehenen Kupplungsdeckel anschlagen kann und eine bei einem verschleißbedingten zusätzlichen Ausfahrweg für den Betätigungskolben für das Nachstellen eine Relativdrehung des Betätigungskolbens zum Nachstellanschlag erzwingt.

Insbesondere liegt der Nachstellanschlag in der hinreichend ausgefahrenen Position des Betätigungskolbens durch Reibschluss drehfest an dem Kupplungsdeckel an. Beispielsweise kann zwischen dem Nachstellanschlag und dem Kupplungsdeckel ein Reibbelag vorgesehen sein. Der Reibschluss des Nachstellanschlags an dem Kupplungsdeckel kann durch eine entsprechend hohe von dem Betätigungssystem aufgebrachte Kraft erhöht werden. Durch die reibschlüssige drehfeste Anlage des Nachstellanschlags an dem Kupplungsdeckel kann leichter eine Drehung des Betätigungskolbens innerhalb des Betätigungszylinders erzwungen werden.

Vorzugsweise ist eine Rückstellfeder zum zumindest mittelbaren Einfahren des Betätigungskolbens in den Betätigungszylinder vorgesehen, wobei die von der Rückstellfeder aufbringbare Axialkraft geringer als eine eine Selbsthemmung zwischen dem Betätigungskolben und dem Nachstellanschlag überwindende Mindestaxialkraft ist. Zum Ausfahren des Betätigungskolbens aus dem Betätigungszylinder kann in dem Betätigungszylinder ein entsprechend hoher Druck angelegt werden, wobei das Einfahren des Betätigungskolbens in den Betätigungszylinder im Wesentlichen ohne Anlegen eines Unterdrucks im Betätigungszylinder erfolgen kann. Der Betätigungskolben kann von der Federkraft der Rückstellfeder eingefahren werden, wobei die Federkraft vergleichsweise gering gehalten werden kann. Insbesondere braucht die Federkraft der Rückstellfeder nur so groß zu sein, dass das im Betätigungszylinder befindliche Fluid gegen einen Umgebungsdruck aus dem Betätigungszylinder verdrängt werden kann. Die insbesondere als Blattfeder ausgestaltete Rückstellfeder ist beispielsweise mit dem Kupplungsdeckel und der Anpressplatte verbunden, um die Anpressplatte bei einem vom Betätigungssystem nicht aufgebauten Druck in eine definierte Ausgangslage, insbesondere eine geöffnete Stellung der Reibungskupplung, zu positionieren. Die Federkraft der Rückstellfeder kann über die Anpressplatte und das Betätigungselement auf den Betätigungskolben wirken, um den Betätigungskolben in den Betätigungszylinder einzufahren. Die an dem Betätigungskolben angreifende Federkraft der Rückstellfeder ist dabei so gering, dass eine Rückdrehung einer zuvor bei einem Nachstellereignis erfolgten Relativdrehung des Nachstellanschlags zum Betätigungskolben vermieden wird.

Nachfolgend wird die Erfindung unter Bezugnahme auf die anliegenden Zeichnungen anhand bevorzugter Ausführungsbeispiele exemplarisch erläutert, wobei die nachfolgend dargestellten Merkmale sowohl jeweils einzeln als auch in Kombination einen Aspekt der Erfindung darstellen können. Es zeigen:
- Fig. 1:: eine schematische Seitenansicht einer ersten Ausführungsform eines Kupplungsaggregats in einer ersten Position vor einer Betätigung,
- Fig. 2:: eine schematische Seitenansicht des Kupplungsaggregats aus Fig. 1 in einer zweiten Position während einer Betätigung,
- Fig. 3:: eine schematische Seitenansicht des Kupplungsaggregats aus Fig. 1 in einer dritten Position während einer Betätigung,
- Fig. 4:: eine schematische Seitenansicht des Kupplungsaggregats aus Fig. 1 in einer vierten Position nach einer Betätigung,
- Fig. 5:: eine schematische Seitenansicht einer zweiten Ausführungsform eines Kupplungsaggregats in einer ersten Position vor einer Betätigung,
- Fig. 6:: eine schematische Seitenansicht des Kupplungsaggregats aus Fig. 5 in einer zweiten Position während einer Betätigung,
- Fig. 7:: eine schematische Seitenansicht des Kupplungsaggregats aus Fig. 5 in einer dritten Position während einer Betätigung,
- Fig. 8:: eine schematische Seitenansicht des Kupplungsaggregats aus Fig. 5 in einer vierten Position nach einer Betätigung.
- Fig. 9:: eine schematische geschnittene Detailansicht einer Nachstelleinrichtung für das Kupplungsaggregat aus einer der Fig. 1 bis 8 in einer eingefahrenen Position,
- Fig. 10:: eine schematische geschnittene Detailansicht der Nachstelleinrichtung aus Fig. 9 in einer ausgefahrenen Position und
- Fig. 11:: eine schematische perspektivische Ansicht einer Spiralfeder für die Nachstelleinrichtung aus Fig. 9 und Fig. 10.

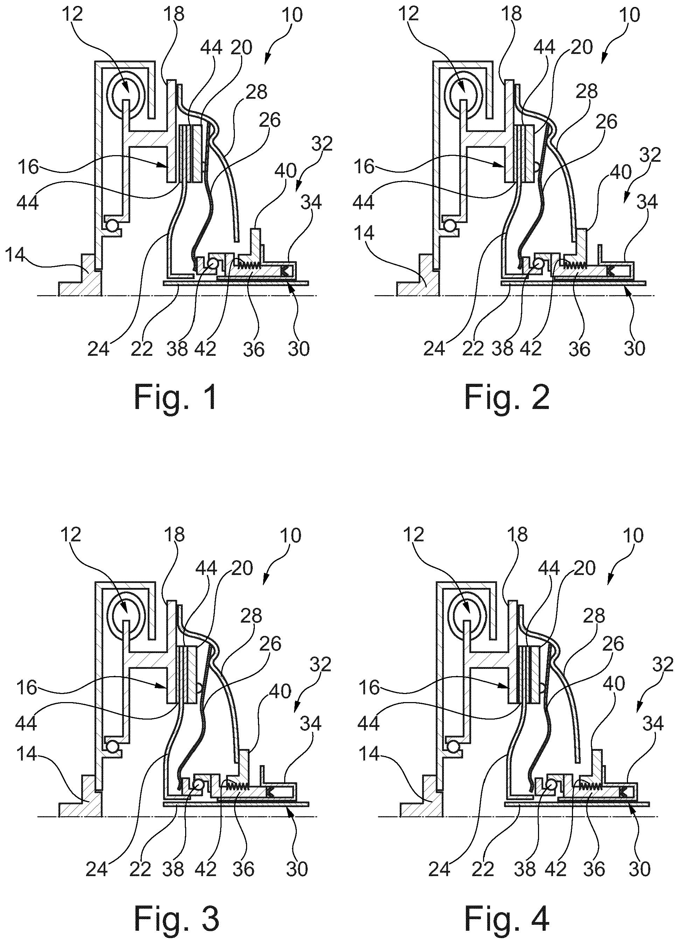

Das in Fig. 1 dargestellte Kupplungsaggregat 10 ist über einen als Zweimassenschwungrad ausgestalteten Drehschwingungsdämpfer 12 mit einer Antriebswelle 14, insbesondere Kurbelwelle, eines Kraftfahrzeugmotors verbunden. Das Kupplungsaggregat 10 weist eine Reibungskupplung 16 auf, die eine über den Drehschwingungsdämpfer 12 mit der Antriebswelle 14 gekoppelte Gegenplatte 18 und eine relativ zur Gegenplatte 18 axial verlagerbare Anpressplatte 20 aufweist, um eine mit einer Getriebeeingangswelle 22 drehfest verbundene Kupplungsscheibe 24 zum Schließen der Reibungskupplung 16 reibschlüssig zu verpressen. Die Anpressplatte 20 kann mit Hilfe eines als tellerfederartige Hebelfeder ausgestalteten Betätigungselement 26 verlagert werden, wobei sich das Betätigungselement 26 an einem in Umfangsrichtung ringförmigen Schwenkpunkt eines mit der Gegenplatte 18 verbundenen Kupplungsdeckels 28 schwenkbar abstützt. Das Betätigungselement 26 kann mit Hilfe eines Betätigungssystems 30 einer Nachstelleinrichtung 32 verschwenkt werden. Hierzu weist das Betätigungssystem 30 einen in einem Betätigungszylinder 34 geführten Betätigungskolben 36 auf, der über ein Betätigungslager 38 an dem Betätigungselement 26 angreift. In dem Betätigungszylinder 34 kann insbesondere hydraulisch ein Druck erhöht werden, so dass der Betätigungskolben 36 aus dem Betätigungszylinder 34 ausgefahren werden kann, um das Betätigungselement 26 zu verschwenken und in dem dargestellten Ausführungsbeispiel dadurch die Reibungskupplung 16 zu schließen. Die Nachstelleinrichtung 32 weist einen Nachstellanschlag 40 auf, der über ein als Gewinde 42 ausgestaltetes Rampensystem relativ verdrehbar mit dem Betätigungskolben 36 verbunden ist.

In der in Fig. 1 dargestellten geöffneten Position der Reibungskupplung 16 liegt in dem Betätigungszylinder 34 kein erhöhter Druck an, so dass der Betätigungskolben 36 soweit in den Betätigungszylinder 34, insbesondere mit Hilfe der Federkraft einer Rückstellfeder, eingefahren ist, dass der Nachstellanschlag 40 an dem Betätigungszylinder 34 axial anliegt. Wenn die Reibungskupplung 16 geschlossen werden soll, kann der Druck im Betätigungszylinder 34 erhöht werden, so dass der Betätigungskolben 36 aus dem Betätigungszylinder 34 ausfahren werden kann, wie in Fig. 2 dargestellt. Der Betätigungskolben 36 kann dabei den Nachstellanschlag 40 mitnehmen. Bei einem entsprechend weiten Ausfahrweg des Betätigungskolbens 36 kann der Nachstellanschlag 40 an dem Kupplungsdeckel 28 anschlagen. Wenn aufgrund eines Verschleißes von Reibbelägen 44 der Reibungskupplung 16 ein entsprechend größerer Hubweg für die Anpressplatte 20 erforderlich ist, muss auch der Betätigungskolben 36 über die in Fig. 2 dargestellte Stellung hinaus entsprechend weiter ausgefahren werden. Wie in Fig. 3 dargestellt kann der an dem Kupplungsdeckel 28 anliegende Nachstellanschlag 40 nicht weiter axial mitbewegt werden, so dass eine Relativdrehung des Betätigungskolbens 36 zum Nachstellanschlag 40 erfolgt, wodurch sich aufgrund des zwischen dem Betätigungskolben 36 und dem Nachstellanschlag 40 ausgebildeten Gewindes 42 auch die axiale Relativlage des Nachstellanschlags 40 zum Betätigungskolben 36 ändert. Wenn anschließend die Reibungskupplung 16 geöffnet und der Betätigungskolben 36 in den Betätigungszylinder 34 eingefahren wird, kann der Nachstellanschlag 40 in einer axial versetzten Position an dem Betätigungszylinder 34 anschlagen, so dass der Betätigungskolben 36 nur in einem entsprechend geringeren Ausmaß in den Betätigungszylinder 34 einfahren kann, wie in Fig. 4 dargestellt. Eine durch einen Verschleiß der Reibbeläge 44 vergrößerter Hubweg der Anpressplatte 20 ist dadurch kompensiert und ein verschleißbedingter Fehlabstand nachgestellt.

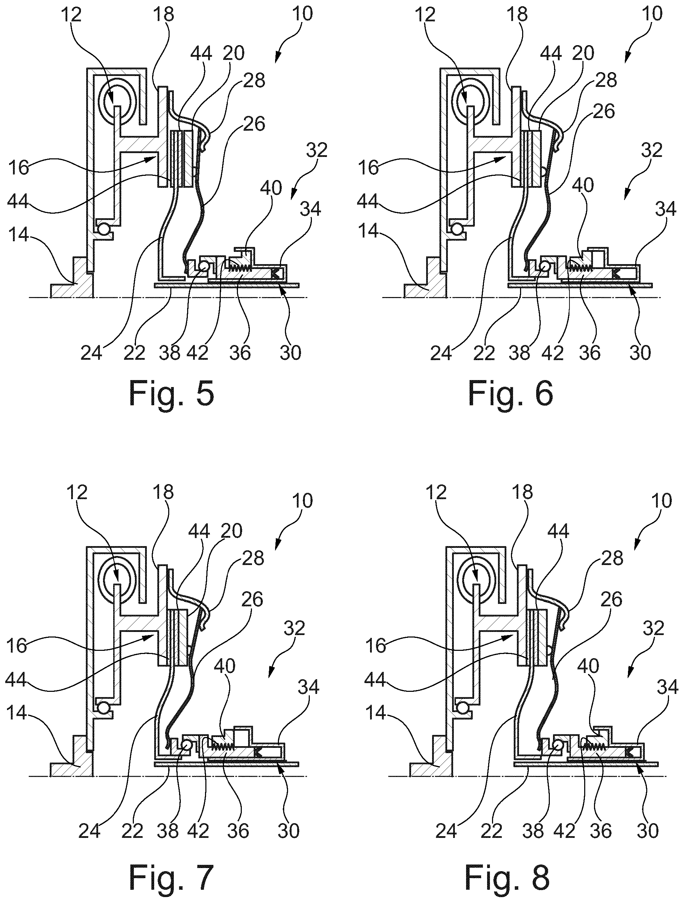

Bei der in den Fig. 5 bis Fig. 8 dargestellten Ausführungsform ist der Kupplungsdeckel 28 kürzer ausgestaltet, so dass der Nachstellanschlag 40 nicht an dem Kupplungsdeckel 28 anschlägt. Stattdessen ist für die Nachstellung ein Kugelschreibermechanismus vorgesehen. Hierbei ist der Nachstellanschlag 40 an dem Betätigungszylinder 34 in axialer Richtung insbesondere drehfest geführt. Wenn der Nachstellanschlag von der in Fig. 5 dargestellten geöffneten Position der Reibungskupplung 16 von dem ausfahrenden Betätigungskolben 36 mitgenommen wird, bleibt der Nachstellanschlag 40, wie in Fig. 6 dargestellt, zunächst im Eingriff und kann sich nicht verdrehen. Gleichzeitig kann beispielsweise mit Hilfe eines geeigneten Rampenmechanismus mit einem Federelement eine an dem Nachstellanschlag 40 angreifende Federkraft in Umfangsrichtung aufgebaut werden. Bei einem hinreichend großen Verschleiß der Reibbeläge 44 kann der Betätigungskolben 36 soweit ausgefahren werden, dass der Nachstellanschlag 40 aus dem Eingriff mit dem Betätigungszylinder 34 gerät, wie in Fig. 7 dargestellt. In dieser axialen Stellung kann der Nachstellanschlag 40 relativ zum Betätigungskolben 36 verdreht werden. Der Nachstellanschlag 40 kann hierbei um ein definiertes Inkrement verdreht werden und beispielsweise in eine in Umfangsrichtung nachfolgende Rastvertiefung springen und bei einem Einfahren des Betätigungskolbens 36 entlang einer in dieser Rastvertiefung einmündenden axialen Führung geführt werden. Dadurch ändert sich die axiale Relativlage des Nachstellanschlags 40 zum Betätigungskolben 36 und der Betätigungskolben 36 kann um eine entsprechend geringere Wegstrecke in der geöffneten Stellung der Reibungskupplung 16 wieder in den Betätigungszylinder 34 eingefahren werden kann, wie in Fig. 8 dargestellt.

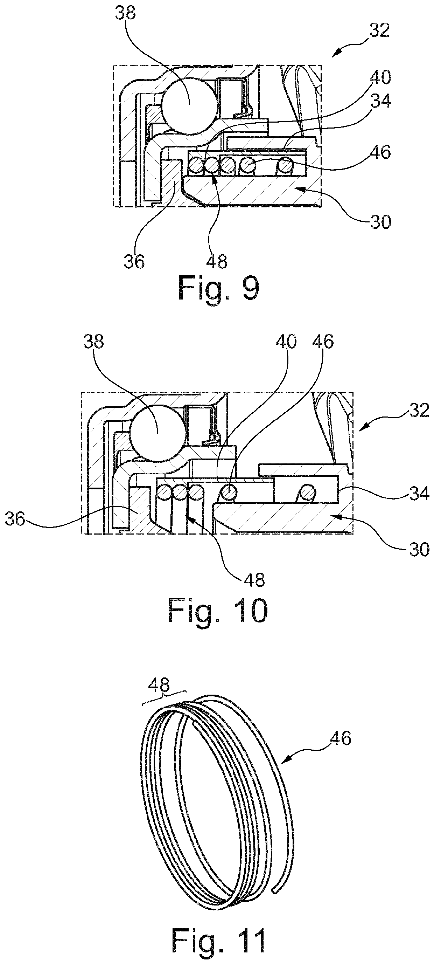

Wie in Fig. 9 dargestellt kann eine Spiralfeder 46 vorgesehen sein, die sich am Betätigungszylinder 34 abstützt und mittelbar über den Betätigungskolben 36 oder den Nachstellanschlag 40 eine axiale Federkraft auf das als Schrägkugellager ausgebildete Betätigungslager 38 ausübt, wodurch das Betätigungslager 38 zusammengehalten wird. Bei einer Bewegung des Betätigungskolbens 36 von der in Fig. 9 dargestellten eingefahrenen Position in die in Fig. 10 ausgefahrene Position kann sich die Spiralfeder 46 entspannen, wodurch allerdings nur in einem Teilbereich eine signifikante axiale Abstandsänderung der einzelnen Windungen erfolgt. In einem anderen Teilbereich der in Fig. 11 dargestellten Spiralfeder 46 ist eine Gewindewicklung 48 mit in axialer Richtung allenfalls geringfügig sich in ihrem axialen Abstand ändernden Wicklungen vorgesehen. Die Gewindewicklung 48 kann ein mit einem korrespondierenden Innengewinde des Nachstellanschlags 40 eingreifendes Gewinde 42 ausbilden, an dem der Nachstellanschlag 40 durch eine Schraubenbewegung in axialer Richtung relativ zum Betätigungskolben 36 verstellt werden kann, um bei einem Nachstellereignis einen verschleißbedingten Fehlabstand nachzustellen.

### Bezugszeichenliste

- 10: Kupplungsaggregat
- 12: Drehschwingungsdämpfer
- 14: Antriebswelle
- 16: Reibungskupplung
- 18: Gegenplatte
- 20: Anpressplatte
- 22: Getriebeeingangswelle
- 24: Kupplungsscheibe
- 26: Betätigungselement
- 28: Kupplungsdeckel
- 30: Betätigungssystem
- 32: Nachstelleinrichtung
- 34: Betätigungszylinder
- 36: Betätigungskolben
- 38: Betätigungslager
- 40: Nachstellanschlag
- 42: Gewinde
- 44: Reibbelag
- 46: Spiralfeder
- 48: Gewindewicklung

## Patentansprüche

1. Nachstelleinrichtung zum Nachstellen eines verschleißbedingten Fehlabstands einer Anpressplatte (20) zu einer Gegenplatte (18) einer Reibungskupplung (16), mit einem einen relativ zu einem Betätigungszylinder (34) verlagerbaren Betätigungskolben (36) aufweisenden Betätigungssystem (32) zum Bewegen eines an der Anpressplatte (20) angreifenden Betätigungselement (26), insbesondere eine als Tellerfeder ausgestaltete Hebelfeder, mit Hilfe des Betätigungskolbens (36) und
einem Nachstellanschlag (40) zum Nachstellen einer Relativlage des Betätigungskolbens (36) in dem Betätigungszylinder (34), **dadurch gekennzeichnet, dass** der Nachstellanschlag (40) über ein Rampensystem (42) mit dem Betätigungskolben (36), insbesondere im Wesentlichen spiralförmig, relativ zum Betätigungskolben (36) verdrehbar ist, wobei der Nachstellanschlag (40) in einer aus dem Betätigungszylinder (34) ausgefahrenen Position des Betätigungskolbens (36) verdrehbar und in einer in dem Betätigungszylinder (34) eingefahrenen Position des Betätigungskolbens (36) gegen ein Verdrehen gesperrt ist.

2. Nachstelleinrichtung nach Anspruch 1 **dadurch gekennzeichnet, dass** das Rampensystem als ein zwischen dem Betätigungskolben (36) und dem Nachstellanschlag (40) ausgebildetes Gewinde (42) ausgeführt ist.

3. Nachstelleinrichtung nach einem der Ansprüche 1 bis 2 **dadurch gekennzeichnet, dass** eine Spiralfeder (46) mit einem über den vorgesehenen Federweg der Spiralfeder (46) in axialer Richtung im Wesentlichen unbeweglichen Gewindewicklung (48) vorgesehen ist, wobei der Nachstellanschlag (40) oder der Betätigungskolben (36) zur Ausführung einer Relativdrehung zwischen dem Nachstellanschlag (40) und dem Betätigungskolben (36) an der Gewindewicklung verdrehbar geführt ist, wobei insbesondere die Spiralfeder (46) zur Aufbringung einer Axialkraft auf ein insbesondere als Schrägkugellager ausgebildetes zwischen dem Betätigungskolben (36) und dem Betätigungselement (26) vorgesehenes Betätigungslager (38) vorgesehen ist.

4. Nachstelleinrichtung nach einem der Ansprüche 1 bis 3 **dadurch gekennzeichnet, dass** der Nachstellanschlag (40) in der eingefahrenen Position des Betätigungskolbens (36) an dem Betätigungszylinder (34) axial anschlägt.

5. Nachstelleinrichtung nach einem der Ansprüche 1 bis 4 **dadurch gekennzeichnet, dass** der Nachstellanschlag (40) in der eingefahrenen Position des Betätigungskolbens (36) gegen ein Verdrehen relativ zum Betätigungskolben (36) selbsthemmend mit dem Betätigungskolben (36) gekoppelt ist, wobei insbesondere in der eingefahrenen Position des Betätigungskolbens (36) an dem Nachstellanschlag (40) eine die Selbsthemmung nicht überwindende, insbesondere von einer Rückstellfeder aufgebrachte, Rückstellkraft angreift.

6. Nachstelleinrichtung nach einem der Ansprüche 1 bis 5 **dadurch gekennzeichnet, dass** in einer hinreichend ausgefahrenen Position des Betätigungskolbens (36) an dem Nachstellanschlag (40) eine Verdrehkraft zum Verdrehen des Nachstellanschlags (40) relativ zum Betätigungskolben (36) angreift, wobei die Verdrehkraft durch eine von dem Betätigungssystem (30) aufgebrachte Axialkraft und/oder durch eine im Umfangsrichtung auf den Nachstellanschlag (40) wirkende Federkraft bereitstellbar ist.

7. Nachstelleinrichtung nach einem der Ansprüche 1 bis 6 **dadurch gekennzeichnet, dass** der Nachstellanschlag (40) entlang eines minimalen Verlagerungswegs des Betätigungskolbens (36), insbesondere an dem Betätigungszylinder (34), in axialer Richtung geführt und gegen ein Verdrehen gesichert ist.

8. Kupplungsaggregat zum Kuppeln einer Antriebswelle (14) eines Kraftfahrzeugs mit mindestens einer Getriebeeingangswelle (22) eines Kraftfahrzeugs, mit einer eine Gegenplatte (18) und eine relativ zur Gegenplatte (18) verlagerbare Anpressplatte (20) aufweisenden Reibungskupplung (16) zum reibschlüssigen Verpressen einer Kupplungsscheibe (24) zwischen der Gegenplatte (18) und der Anpressplatte (20), einem an der Anpressplatte (20) angreifendes Betätigungselement (26), insbesondere eine als Tellerfeder ausgestaltete Hebelfeder, und einer Nachstelleinrichtung (32) nach einem der Ansprüche 1 bis 7, wobei die Reibungskupplung (10) einen die Gegenplatte (18) und/oder die Anpressplatte (20) zumindest teilweise abdeckenden Kupplungsdeckel (28) aufweist und der Nachstellanschlag (40) in einer hinreichend ausgefahrenen Position des Betätigungskolbens (36) an dem Kupplungsdeckel (28) anschlägt.

9. Kupplungsaggregat nach Anspruch 8 **dadurch gekennzeichnet, dass** eine Rückstellfeder zum zumindest mittelbaren Einfahren des Betätigungskolbens (36) in den Betätigungszylinder (34) vorgesehen ist, wobei die von der Rückstellfeder aufbringbare Axialkraft geringer als eine eine Selbsthemmung zwischen dem Betätigungskolben (36) und dem Nachstellanschlag (40) überwindende Mindestaxialkraft ist.

## Claims

1. Adjusting device for adjusting a wear-induced faulty spacing of a pressure plate (20) from a counterplate (18) of a friction clutch (16), having an actuating system (32), which has an actuating piston (36) which can be moved relative to an actuating cylinder (34), for moving an actuating element (26) which acts on the pressure plate (20), in particular a lever spring which is configured as a cup spring, with the aid of the actuating piston (36) and an adjusting stop (40) for adjusting a relative position of the actuating piston (36) in the actuating cylinder (34), **characterized in that** the adjusting stop (40) can be rotated relative to the actuating piston (36), in particular in a substantially spiral manner, by way of the actuating piston (36) via a ramp system (42), the adjusting stop (40) being rotatable in a position of the actuating piston (36), in which position said piston is extended out of the actuating cylinder (34), and being locked against rotation in a position of the actuating piston (36), in which position said piston is retracted into the actuating cylinder (34).

2. Adjusting device according to Claim 1, **characterized in that** the ramp system is configured as a thread (42) which is embodied between the actuating piston (36) and the adjusting stop (40).

3. Adjusting device according to either of Claims 1 and 2, **characterized in that** a spiral spring (46) is provided with a thread winding (48) which is substantially immovable in the axial direction via the provided spring travel of the spiral spring (46), the adjusting stop (40) or the actuating piston (36) being guided rotatably on the thread winding in order to perform a relative rotation between the adjusting stop (40) and the actuating piston (36), the spiral spring (46) being provided, in particular, in order to apply an axial force to an actuating bearing (38) which is configured, in particular, as an angular contact ball bearing and is provided between the actuating piston (36) and the actuating element (26).

4. Adjusting device according to one of Claims 1 to 3, **characterized in that** the adjusting stop (40) bears axially against the actuating cylinder (34) in the retracted position of the actuating piston (36).

5. Adjusting device according to one of Claims 1 to 4, **characterized in that**, in the retracted position of the actuating piston (36), the adjusting stop (40) is coupled to the actuating piston (36) in a self-locking manner against rotation relative to the actuating piston (36), a restoring force which does not overcome the self-locking action and is applied, in particular, by a restoring spring acting on the adjusting stop (40), in particular, in the retracted position of the actuating piston (36).

6. Adjusting device according to one of Claims 1 to 5, **characterized in that**, in a sufficiently extended position of the actuating piston (36), a rotational force for rotating the adjusting stop (40) relative to the actuating piston (36) acts on the adjusting stop (40), it being possible for the rotational force to be provided by way of an axial force which is applied by the actuating system (30) and/or by way of a spring force which acts on the adjusting stop (40) in the circumferential direction.

7. Adjusting device according to one of Claims 1 to 6, **characterized in that** the adjusting stop (40) is guided in the axial direction along a minimum movement travel of the actuating piston (36), in particular on the actuating cylinder (34), and is secured against rotation.

8. Clutch assembly for coupling a drive shaft (14) of a motor vehicle to at least one transmission input shaft (22) of a motor vehicle, having a friction clutch (16) which has a counterplate (18) and a pressure plate (20) which can be moved relative to the counterplate (18), for pressing a clutch disc (24) in a frictionally locking manner between the counterplate (18) and the pressure plate (20), an actuating element (26) which acts on the pressure plate (20), in particular a lever spring which is configured as a cup spring, and an adjusting device (32) according to one of Claims 1 to 7, the friction clutch (10) having a clutch cover (28) which covers the counterplate (18) and/or the pressure plate (20) at least partially, and the adjusting stop (40) bearing against the clutch cover (28) in a sufficiently extended position of the actuating piston (36) .

9. Clutch assembly according to Claim 8, **characterized in that** a restoring spring is provided for at least indirectly retracting the actuating piston (36) into the actuating cylinder (34), the axial force which can be applied by the restoring spring being lower than a minimum axial force which overcomes a self-locking action between the actuating piston (36) and the adjusting stop (40).

## Revendications

1. Dispositif de réglage pour le réglage d'une distance erronée due à l'usure d'un plateau de pression (20) à un contre-plateau (18) d'un embrayage à friction (16), avec un système d'actionnement (32) présentant un piston d'actionnement (36) déplaçable par rapport à un cylindre d'actionnement (34) pour mouvoir un élément d'actionnement (26) agissant sur le plateau de pression (20), en particulier un ressort à levier réalisé en forme de rondelle élastique, à l'aide du piston d'actionnement (36), et une butée de réglage (40) pour régler une position relative du piston d'actionnement (36) dans le cylindre d'actionnement (34), **caractérisé en ce que** la butée de réglage (40) peut tourner au moyen d'un système de rampe (42) avec le piston d'actionnement (36), en particulier essentiellement en forme de spirale, par rapport au piston d'actionnement (36), dans lequel la butée de réglage (40) peut tourner dans une position du piston d'actionnement (36) sortie du cylindre d'actionnement (34) et est bloquée contre une rotation dans une position du piston d'actionnement (36) rentrée dans le cylindre d'actionnement (34).

2. Dispositif de réglage selon la revendication 1, **caractérisé en ce que** le système de rampe est réalisé sous la forme d'un filet (42) formé entre le piston d'actionnement (36) et la butée de réglage (40).

3. Dispositif de réglage selon une des revendications 1 à 2, **caractérisé en ce qu'**il est prévu un ressort spiral (46) avec un enroulement spiral (48) essentiellement immobile en direction axiale sur la course élastique prévue du ressort spiral (46), dans lequel la butée de réglage (40) ou le piston d'actionnement (36) est guidé de façon tournante sur l'enroulement spiral pour l'exécution d'une rotation relative entre la butée de réglage (40) et le piston d'actionnement (36), dans lequel notamment le ressort spiral (46) est prévu pour appliquer une force axiale sur un palier d'actionnement (38) réalisé en particulier sous forme de roulement à billes à portée oblique entre le piston d'actionnement (36) et l'élément d'actionnement (26).

4. Dispositif de réglage selon l'une quelconque des revendications 1 à 3, **caractérisé en ce que** la butée de réglage (40) bute axialement contre le cylindre d'actionnement (34) dans la position rentrée du piston d'actionnement (36).

5. Dispositif de réglage selon l'une quelconque des revendications 1 à 4, **caractérisé en ce que** la butée de réglage (40) est couplée au piston d'actionnement (36) de façon autobloquante contre une rotation par rapport au piston d'actionnement (36) dans la position rentrée du piston d'actionnement (36), dans lequel une force de rappel ne surmontant pas l'auto-blocage, appliquée en particulier par un ressort de rappel, agit sur la butée de réglage (40), en particulier dans la position rentrée du piston d'actionnement (36).

6. Dispositif de réglage selon l'une quelconque des revendications 1 à 5, **caractérisé en ce qu'**une force de rotation pour faire tourner la butée de réglage (40) par rapport au piston d'actionnement (36) agit sur la butée de réglage (40) dans une position suffisamment sortie du piston d'actionnement (36), dans lequel la force de rotation peut être fournie par une force axiale appliquée par le système d'actionnement (30) et/ou par une force de rappel agissant en direction périphérique sur la butée de réglage (40).

7. Dispositif de réglage selon l'une quelconque des revendications 1 à 6, **caractérisé en ce que** la butée de réglage (40) est guidée en direction axiale le long d'une course de déplacement minimale du piston d'actionnement (36), en particulier sur le cylindre d'actionnement (34), et est bloquée contre une rotation.

8. Ensemble d'embrayage destiné à coupler un arbre d'entraînement (14) d'un véhicule à moteur à au moins un arbre d'entrée de boîte de vitesses (22) d'un véhicule à moteur, avec un embrayage à friction (16) présentant un contre-plateau (18) et un plateau de pression (20) déplaçable par rapport au contre-plateau (18) pour le serrage à friction d'un disque d'embrayage (24) entre le contre-plateau (18) et le plateau de pression (20), avec un élément d'actionnement (26) agissant sur le plateau de pression (20), en particulier un ressort à levier réalisé en forme de rondelle élastique, et avec un dispositif de réglage (32) selon l'une quelconque des revendications 1 à 7, dans lequel l'embrayage à friction (10) présente un couvercle d'embrayage (28) recouvrant au moins partiellement le contre-plateau (18) et/ou le plateau de pression (20) et la butée de réglage (40) bute contre le couvercle d'embrayage (28) dans une position suffisamment sortie du piston d'actionnement (36).

9. Ensemble d'embrayage selon la revendication 8, **caractérisé en ce qu'**il est prévu un ressort de rappel pour la rentrée au moins indirecte du piston d'actionnement (36) dans le cylindre d'actionnement (34), dans lequel la force axiale applicable par le ressort de rappel est inférieure à une force axiale minimale surmontant un auto-blocage entre le piston d'actionnement (36) et la butée de réglage (40).
